# EUROPÄISCHE PATENTANMELDUNG

(11) **EP 3 926 598 A2**
(43) Veröffentlichungstag der Anmeldung: **22.12.2021**
(21) Anmeldenummer: 21178591.0
(22) Anmeldetag: 09.06.2021
(51) Int. Cl.: G08B 25/00, H04W 4/90, G08B 29/12, G08B 25/01

(54) **NOTFALL-KOMMUNIKATIONSSYSTEM**

(30) Priorität: 10.06.2020 DE 102020115417
(71) Anmelder: Weber-Hydraulik GmbH, 4460 Losenstein (AT)
(72) Erfinder: RADERMACHER, Sascha, 53474 Bad Neuenahr - Ahrweiler (DE)
(74) Vertreter: Burger, Hannes

(57) **Zusammenfassung**

Die Erfindung betrifft ein Notfall-Kommunikationssystem (1) umfassend
- zumindest ein, vorzugsweise zumindest zwei, Notfall-Kommunikationsgerät(e) (2),
- eine Internet of Things - Architektur (3), welche eingerichtet ist, mit dem zumindest einen, vorzugsweise mit den zumindest zwei Notfall-Kommunikationsgerät(en) (2) über dessen/deren Drahtlosschnittstelle (4) zu kommunizieren,
wobei das zumindest eine, vorzugsweise die zumindest zwei Notfall-Kommunikationsgerät(e) (2) jeweils
zumindest eine Betätigungseinrichtung (6), vorzugsweise in Form eines Buttons,
zumindest eine Drahtlosschnittstelle (4),
und ein mit der zumindest einen Betätigungseinrichtung (6) verbundenes Nachrichten-Modul (5), welches ausgebildet ist, bei Betätigung der Betätigungseinrichtung (6) eine Nachricht (12) über die Drahtlosschnittstelle (4) an die IoT - Architektur (3) zu übermitteln, umfassen,
wobei in der IoT - Architektur (3) eine Zuordnungsroutine (13) hinterlegt ist, die anhand der übermittelten Nachricht (12) das Notfall-Kommunikationsgerät (2), welches die Nachricht (12) übermittelt hat, erkennt und dem zumindest einen, vorzugsweise jedem der zumindest zwei, Notfall-Kommunikationsgerät(e) (2) jeweils zumindest eine Empfangsadresse (E1, E2), insbesondere eine Telefonnummer, zuordnet,
und wobei die IoT - Architektur (3) eingerichtet ist, bei Einlangen einer Nachricht (12) von einem Notfall-Kommunikationsgerät (2) eine alarmbezogene Information (14, 19) an die diesem Notfall-Kommunikationsgerät (2) zugeordnete(n) Empfangsadresse(n) (E1, E2) zu versenden.

## Beschreibung

Die Erfindung betrifft ein Notfall-Kommunikationssystem ein Verfahren zum Betreiben eines Notfall-Kommunikationssystems und ein Notfall-Kommunikationsgerät

Es besteht der Bedarf, im Falle eines Notfalles - dazu zählen neben medizinischen Notfällen auch betriebliche Situationen, die schnelles Handeln erfordern - geeignetes bzw. ausgebildetes Personal an den betreffenden Ort zu bringen. Ein Notfall-Kommunikationssystem muss daher in der Lage sein, diesbezügliche Informationen schnell weiterzuleiten, um eine schnelle und zielgerichtete Reaktion zu ermöglichen.

Aufgabe der vorliegenden Erfindung war es, ein Notfall-Kommunikationssystem bereitzustellen, welches schnell und vollautomatisiert eine Notfallmeldung nicht nur weiterleitet, sondern auch gleich an die richtigen Adressaten schickt. Die Umsetzung soll zuverlässig und gleichzeitig kostengünstig erfolgen können. Das Notfall-Kommunikationssystem soll auch in bestehenden Anlagen bzw. Gebäuden einsetzbar und nachrüstbar sein. Weiters soll sich dieses System durch hohe Flexibilität auszeichnen.

Diese Aufgabe wird gelöst durch ein Notfall-Kommunikationssystem umfassend
- zumindest ein, vorzugsweise zumindest zwei Notfall-Kommunikationsgerät(e),
- eine Internet of Things (IoT) - Architektur, welche eingerichtet ist, mit dem zumindest einen, vorzugsweise mit den zumindest zwei Notfall-Kommunikationsgerät(en) über dessen/deren Drahtlosschnittstelle zu kommunizieren,
wobei das zumindest eine, vorzugsweise die zumindest zwei Notfall-Kommunikationsgerät(e) jeweils
zumindest eine, vorzugsweise mechanische, Betätigungseinrichtung, vorzugsweise in Form eines Buttons,
zumindest eine Drahtlosschnittstelle, vorzugsweise eine WLAN-Schnittstelle und/oder eine GSM-Schnittstelle,
und ein mit der zumindest einen Betätigungseinrichtung verbundenes Nachrichten-Modul, welches ausgebildet ist, bei Betätigung der Betätigungseinrichtung eine Nachricht über die Drahtlosschnittstelle an die IoT - Architektur zu übermitteln,
umfassen,
wobei in der IoT - Architektur eine Zuordnungsroutine, vorzugsweise in Art einer Zuordnungstabelle, hinterlegt ist, die anhand der übermittelten Nachricht das Notfall-Kommunikationsgerät, welches die Nachricht übermittelt hat, erkennt und dem zumindest einem, vorzugsweise jedem der zumindest zwei Notfall-Kommunikationsgerät(e) jeweils zumindest eine Empfangsadresse, insbesondere eine Telefonnummer, zuordnet,
und wobei die IoT - Architektur eingerichtet ist, bei Einlangen einer Nachricht von einem Notfall-Kommunikationsgerät eine alarmbezogene Information an die diesem Notfall-Kommunikationsgerät zugeordnete(n) Empfangsadresse(n) zu versenden.

Das erfindungsgemäße Notfall-Kommunikationssystem ermöglicht nicht nur eine schnelle Alarmierung, sondern erreicht über die Zuordnungsroutine - unverzüglich und ohne Umwege - die richtige(n) Person(en). Ein großer Vorteil besteht darin, dass je nach Standort des jeweiligen Notfall-Kommunikationsgerätes unterschiedliche Personen alarmiert werden können. Die Zuordnungsroutine kann einfach (um)programmiert werden und kann auch komplexe Zusammenhänge verwalten. So wäre es z.B. möglich, dass die in der Zuordnungsroutine hinterlegte Zuordnung in Abhängigkeit der (Tages-)Zeit programmiert ist, sodass z.B. tagsüber und nachts unterschiedliche Empfangsadressen (bzw. Personen) hinterlegt sind.

Ein Notfall-Kommunikationsgerät kann jedes kommunikationsfähige Gerät sein, insbesondere ein (bestehendes) Gerät, welches z.B. auch für andere Zwecke genutzt werden kann, wie z.B. ein Mobiltelefon, oder ein eigens für diesen Zweck konzipiertes Gerät, welches gegebenenfalls nur die Notfall-Funktion beinhaltet, sein.

Unter einer Internet of Things - Architektur bzw. IoT - Architektur wird ein System bzw. eine Infrastruktur verstanden, welches dazu eingerichtet ist, kommunikationsfähige Einrichtungen (wie Geräte, Mobiltelefone, Computer, etc.) miteinander zu verknüpfen bzw. zu vernetzten und auf diese Weise eine Kommunikation zwischen diesen Einrichtungen zu ermöglichen. Das Internet of Things kann neben Kommunikation auch Funktionen wie Zuordnungsroutinen, Steuerroutinen, Überwachungsroutinen, etc. enthalten.

Im Falle von drahtlos kommunizierenden Einrichtungen umfasst die IoT - Architektur ebenfalls Drahtlosschnittstellen, um die Kommunikation mit diesen Einrichtungen zu ermöglichen. Solche Drahtlosschnittstellen können z.B. WLAN-Router, Bluetooth-Schnittstellen, GSM Antennen, etc. sein.

Eine Empfängeradresse kann jede Adresse sein, mittels der eine Person über ein Empfangs- bzw. Kommunikationsgerät eine Information bzw. Nachricht (in digitaler bzw. elektronischer Form) empfangen kann, wie z.B. eine (Mobil-)Telefonnummer, eine e-mail Adresse, eine Adresse eines Messengerdienstes, etc..

Eine alarmbezogene Information kann beispielsweise eine Nachricht (z.B. eine Push-Nachricht, eine Messengerdienst-Nachricht, eine SMS, eine e-mail, etc.) mit dem Hinweis auf einen Notfall und einer Information über den Standort, an dem der Notfall eingetreten ist bzw. an dem die Betätigungseinrichtung des Notfall-Kommunikationsgerätes betätigt wurde.

Eine bevorzugte Ausführungsform zeichnet sich dadurch aus, dass in der Zuordnungsroutine dem zumindest einen, vorzugsweise jedem der zumindest zwei Notfall-Kommunikationsgerät(e) eine Information betreffend den Standort des jeweiligen Notfall-Kommunikationsgerätes zugeordnet ist. Auf diese Weise kann das System jeder (Notfall-)Nachricht eines Notfall-Kommunikationsgerätes einen Standort zuordnen und diesen auch gleich an die betreffende(n) Empfängeradresse(n) weiterleiten.

Eine bevorzugte Ausführungsform zeichnet sich dadurch aus, dass die von einem Notfall-Kommunikationsgerät an die IoT - Architektur übermittelte Nachricht eine Kennung zur Identifikation des Notfall-Kommunikationsgerätes und/oder eine Information betreffend den Standort des Notfall-Kommunikationsgerätes umfasst. Dadurch identifiziert sich das Notfall-Kommunikationsgerät selbst bzw. übermittelt eine Standortinformation. Dies ist insbesondere innerhalb eines komplexen Gebäudes vorteilhaft. So kann die Standortinformation auch die Nummer oder Bezeichnung des Raumes sein, in dem das (betätigte) Notfall-Kommunikationsgerät angeordnet ist.

Eine bevorzugte Ausführungsform zeichnet sich dadurch aus, dass die von der IoT - Architektur versendete alarmbezogene Information eine Kennung zur Identifikation des Notfall-Kommunikationsgerätes und/oder eine Information betreffend den Standort des Notfall-Kommunikationsgerätes umfasst. Dadurch erhält die alarmierte Person die erforderliche Information, um sofort Maßnahmen treffen zu können.

Eine bevorzugte Ausführungsform zeichnet sich dadurch aus, dass das/die Nachrichten-Modul(e) des/der Notfall-Kommunikationsgeräte(s) eingerichtet ist/sind, in Zeitabständen, vorzugsweise zumindest 1x pro Tag, zumindest eine Statusnachricht an die IoT - Architektur zu übermitteln, und dass die IoT - Architektur eine Prüfroutine zur Funktionsprüfung des/der Kommunikationsgeräte(s) umfasst, wobei die Prüfroutine ausgebildet ist, die Statusnachricht zu empfangen und auszuwerten. Dadurch können Fehler, wie z.B. in der Funkverbindung oder aufgrund leerer Energiespeicher, erkannt werden, ohne das die Geräte jeweils vor Ort überprüft werden müssen.

Eine bevorzugte Ausführungsform zeichnet sich dadurch aus, dass die IoT Architektur eine Feedbackroutine umfasst, die eingerichtet ist, von Empfangsadressen, an die eine alarmbezogene Information versendet wurde, ein Bestätigungsnachricht über den Empfang und/oder die Quittierung der alarmbezogenen Information zu empfangen. Dadurch wird auf zuverlässige Weise verhindert, dass der Alarm nicht "ins Leere geht".

Eine bevorzugte Ausführungsform zeichnet sich dadurch aus, dass in der Zuordnungsroutine der IoT - Architektur dem zumindest einen, vorzugsweise jedem der zumindest zwei Kommunikationsgerät(e) jeweils zumindest eine erste Empfangsadresse und zumindest eine zweite Empfangsadresse zugeordnet sind und dass die IoT - Architektur eingerichtet ist, bei Einlangen einer Nachricht von einem Notfall-Kommunikationsgerät eine erste alarmbezogene Information an die diesem Notfall-Kommunikationsgerät zugeordnete(n) erste(n) Empfangsadresse(n) zu versenden und dass bei Ausbleiben einer Bestätigungsnachricht über den Empfang und/oder die Quittierung der ersten alarmbezogenen Information von der/den ersten Empfangsadresse(n) ein zweites alarmbezogenes Signal an die zweite Empfangsadresse versendet wird. Hier reagiert das System automatisch, wenn eine Zielperson nicht erreichbar ist bzw. die alarmbezogene Information nicht erhält. Dabei wird eine Backup-Empfangsadresse bzw. Backup-Person kontaktiert.

Eine bevorzugte Ausführungsform zeichnet sich dadurch aus, dass die IoT - Architektur eingerichtet ist, ein Feedbacksignal an jenes Notfall-Kommunikationsgerät, welches eine Nachricht an die IoT - Architektur übermittelt hat, zu senden, insbesondere wenn die Nachricht empfangen und/oder das Notfall-Kommunikationsgerät erkannt und/oder eine alarmbezogene Information an die diesem Kommunikationsgerät zugeordnete(n) Empfangsadresse(n) versendet wurde. Dadurch kann auch jener Person, welche einen Notfall gemeldet hat, signalisiert werden, dass der Alarm empfangen und erfolgreich an die entsprechende(n) Person(en) weitergeleitet wurde.

Eine bevorzugte Ausführungsform zeichnet sich dadurch aus, dass das/die Notfall-Kommunikationsgerät(e) jeweils zumindest eine, vorzugsweise zumindest zwei, Leuchteinrichtung(en), vorzugsweise in Form einer LED, aufweisen, die mit dem Nachrichten-Modul verbunden ist/sind, wobei vorzugsweise das Nachrichten-Modul eingerichtet ist, die zumindest eine Leuchteinrichtung zum Leuchten zu bringen, wenn es eine Nachricht an die IoT-Architektur übermittelt und/oder ein Feedbacksignal von der IoT-Architektur empfangen hat. Auf diese Weise kann jener Person, welche einen Notfall meldet, z.B. signalisiert werden, dass das System grundsätzlich funktionsfähig (oder nicht funktionsfähig) ist, dass eine Nachricht erfolgreich abgesetzt wurde, dass der Alarm empfangen und erfolgreich an die entsprechende(n) Person(en) weitergeleitet wurde.

Eine bevorzugte Ausführungsform zeichnet sich dadurch aus, dass die von außerhalb des Notfall-Kommunikationsgerätes zugängliche Betätigungsfläche der Betätigungseinrichtung zumindest 2cm², besonders bevorzugt zumindest 3cm² beträgt und/oder dass die von außerhalb des Notfall-Kommunikationsgerätes zugängliche Betätigungsfläche der Betätigungseinrichtung zumindest 15%, vorzugsweise zumindest 25%, der Frontfläche der Betätigungseinrichtung einnimmt. Diese Maßnahme zielt darauf ab, die Betätigungseinrichtung optisch und haptisch hervorzuheben, um im Notfall ein leichtes Erkennen und Betätigen sicherzustellen.

Eine bevorzugte Ausführungsform zeichnet sich dadurch aus, dass das/die Notfall-Kommunikationsgerät(e) jeweils zumindest zwei Betätigungseinrichtungen, die mit dem Nachrichten-Modul verbunden sind, aufweist, wobei vorzugsweise das Notfall-Kommunikationsgerät eingerichtet ist, bei gleichzeitiger Betätigung von zwei Betätigungseinrichtungen einen Betriebsmodus zu starten und/oder zwischen zwei Betriebsmodi zu wechseln. Dadurch werden die Funktionalität und Flexibilität des Systems erhöht.

Eine bevorzugte Ausführungsform zeichnet sich dadurch aus, dass das/die Notfall-Kommunikationsgerät(e) jeweils eine Befestigungsschnittstelle, insbesondere ein oder mehrere Löcher für Schrauben und/oder einen Magneten und/oder einen Hacken und/oder eine Schiene und/oder einen Rast- oder Verriegelungsmechanismus, zum - vorzugsweise lösbaren - Befestigen an einer ortsfesten Struktur, insbesondere einer Wand aufweisen, wobei vorzugsweise die Befestigungsschnittstelle eine Handhabe, insbesondere einen Griff und/oder eine Greiffläche und/oder einen Betätigungshebel, zum werkzeuglosen Befestigen und/oder Lösen des Notfall-Kommunikationsgerätes (an bzw. von einer ortsfesten Struktur) aufweist. Auf diese Weise können die Notfall-Kommunikationsgeräte stationär z.B. in oder an einem Gebäude befestigt werden, vorzugsweise über Räume verteilt.

Eine bevorzugte Ausführungsform zeichnet sich dadurch aus, dass die Befestigungsschnittstelle - zur Befestigung des Notfall-Kommunikationsgerätes an oder in einer elektrischen Schnittstelle, insbesondere einer Steckdose - in Form eines Steckers ausgebildet ist, wobei vorzugsweise elektrische Kontakte des Steckers mit einem elektrischen Energiespeicher des Notfall-Kommunikationsgerätes verbunden sind. Die Befestigung des Notfall-Kommunikationsgerätes kann auf diese Weise einfach an bestehenden Strukturen (z.B. Steckdose) erfolgen. Ein weiterer Vorteil besteht darin, dass die Befestigungsstruktur neben der Funktion einer Halterung des Notfall-Kommunikationsgerätes auch die Funktion einer Ladeschnittstelle übernimmt.

Eine bevorzugte Ausführungsform zeichnet sich dadurch aus, dass die Notfall-Kommunikationsgeräte in verschiedenen Räumen eines Gebäudes, insbesondere eines Betriebsgebäudes, verteilt angeordnet, und vorzugsweise ortsfest - vorzugsweise lösbar - montiert sind, vorzugsweise an den Wänden der Räume und/oder jeweils neben einer Eingangstür. Auf diese Weise kann den Räumen jeweils eine Alarm-Funktion zugeordnet werden.

Eine bevorzugte Ausführungsform zeichnet sich dadurch aus, dass in dem/den Notfall-Kommunikationsgerät(en) jeweils ein Ortungssystem, insbesondere ein GPS-Ortungssystem, integriert ist.

Die Ortung kann - z.B. wenn GPS Empfang nicht möglich ist (z.B. in Kellerräumlichkeiten) - mittels WLAN erfolgen, beispielsweise über die Position des Routers, mit dem das Notfall-Kommunikationsgerät in Verbindung tritt, oder der Auswertung der Signalstärke verschiedener Router. Die kann sowohl im Notfall-Kommunikationsgerät selbst oder in der IoT - Architektur oder einer vorgeschalteten Einrichtung erfolgen.

Eine bevorzugte Ausführungsform zeichnet sich dadurch aus, dass in dem/den Notfall-Kommunikationsgerät(en) jeweils ein elektrischer Energiespeicher, vorzugsweise mit einer Ladeschnittstelle, angeordnet ist. Dadurch kann insbesondere das Nachrichten-Modul und/oder die Drahtlosschnittstelle und/oder das Ortungssystem mit Energie versorgt werden.

Eine bevorzugte Ausführungsform zeichnet sich dadurch aus, dass die Zuordnungsroutine programmierbar ist und/oder dass in der Zuordnungsroutine verschiedenen Notfall-Kommunikationsgeräten unterschiedliche Empfangsadressen zugeordnet sind.

Das Ziel wird auch erreicht mit einem Verfahren zum Betreiben eines erfindungsgemäßen Notfall-Kommunikationssystems, wobei das Nachrichten-Modul eines Notfall-Kommunikationsgerätes bei Betätigung der Betätigungseinrichtung eine Nachricht über die Drahtlosschnittstelle an die IoT - Architektur übermittelt, und wobei die in der IoT - Architektur hinterlegte Zuordnungsroutine anhand der übermittelten Nachricht das Notfall-Kommunikationsgerät, welches die Nachricht übermittelt hat, erkennt und dem zumindest einen, vorzugsweise jedem der zumindest zwei Notfall-Kommunikationsgerät(e) jeweils zumindest eine Empfangsadresse, insbesondere eine Telefonnummer, zuordnet,
und wobei die IoT - Architektur bei Einlangen einer Nachricht von einem Notfall-Kommunikationsgerät eine alarmbezogene Information an die diesem Notfall-Kommunikationsgerät zugeordnete(n) Empfangsadresse(n) versendet

Das Ziel wird auch erreicht mit einem Notfall-Kommunikationsgerät für ein erfindungsgemäßes Notfall-Kommunikationssystem wobei das Notfall-Kommunikationsgerät zumindest eine, vorzugsweise mechanische, Betätigungseinrichtung, vorzugsweise in Form eines Buttons,
zumindest eine Drahtlosschnittstelle, vorzugsweise eine WLAN-Schnittstelle und/oder eine GSM-Schnittstelle,
und ein mit der zumindest einen Betätigungseinrichtung verbundenes Nachrichten-Modul, welches ausgebildet ist, bei Betätigung der Betätigungseinrichtung eine Nachricht über die Drahtlosschnittstelle an eine IoT - Architektur zu übermitteln.

Eine bevorzugte Ausführungsform zeichnet sich dadurch aus, dass das Nachrichten-Modul eingerichtet ist, in Zeitabständen, vorzugsweise zumindest 1x pro Tag, Statusnachrichten an eine IoT - Architektur zu übermitteln.

Eine bevorzugte Ausführungsform zeichnet sich dadurch aus, dass das Notfall-Kommunikationsgerät zumindest eine, vorzugsweise zumindest zwei, Leuchteinrichtung(en), vorzugsweise in Form einer LED, aufweisen, die mit dem Nachrichten-Modul verbunden ist/sind und dass das Nachrichten-Modul eingerichtet ist, die zumindest eine Leuchteinrichtung zum Leuchten zu bringen, wenn eine Nachricht an die IoT-Architektur übermittelt und/oder ein Feedbacksignal von der IoT-Architektur empfangen hat.

Eine bevorzugte Ausführungsform zeichnet sich dadurch aus, dass die von außerhalb des Notfall-Kommunikationsgerätes zugängliche Betätigungsfläche der Betätigungseinrichtung zumindest 2cm², besonders bevorzugt zumindest 3cm² beträgt, und/oder dass die von außerhalb des Notfall-Kommunikationsgerätes zugängliche Betätigungsfläche der Betätigungseinrichtung zumindest 15%, vorzugsweise zumindest 25%, der Frontfläche der Betätigungseinrichtung einnimmt.

Eine bevorzugte Ausführungsform zeichnet sich dadurch aus, dass das Notfall-Kommunikationsgerät zumindest zwei Betätigungseinrichtungen, die mit dem Nachrichten-Modul verbunden sind, aufweist, wobei vorzugsweise das Notfall-Kommunikationsgerät eingerichtet ist, bei gleichzeitiger Betätigung von zwei Betätigungseinrichtungen einen Betriebsmodus zu starten und/oder zwischen zwei Betriebsmodi zu wechseln.

Eine bevorzugte Ausführungsform zeichnet sich dadurch aus, dass das Notfall-Kommunikationsgerät eine Befestigungsschnittstelle, insbesondere ein oder mehrere Löcher für Schrauben und/oder einen Magneten und/oder einen Hacken und/oder eine Schiene und/oder einen Rast- oder Verriegelungsmechanismus, zum - vorzugsweise lösbaren - Befestigen an einer ortsfesten Struktur, insbesondere einer Wand aufweist, wobei vorzugsweise die Befestigungsschnittstelle eine Handhabe, insbesondere einen Griff und/oder eine Greiffläche und/oder einen Betätigungshebel, zum werkzeuglosen Befestigen und/oder Lösen des Notfall-Kommunikationsgerätes (an bzw. von einer ortsfesten Struktur) aufweist.

Zum besseren Verständnis der Erfindung wird diese anhand der nachfolgenden Figuren näher erläutert.

Es zeigen jeweils in stark vereinfachter, schematischer Darstellung:
- Fig. 1: ein erfindungsgemäßes Notfall-Kommunikationssystem
- Fig. 2: ein Gebäude mit Notfall-Kommunikationsgeräten
- Fig. 3: ein erfindungsgemäßes Notfall-Kommunikationsgerät
- Fig. 4: eine Zuordnungsroutine in Form einer Zuordnungstabelle
- Fig. 5: eine Variante eines erfindungsgemäßen Notfall-Kommunikationsgerätes

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

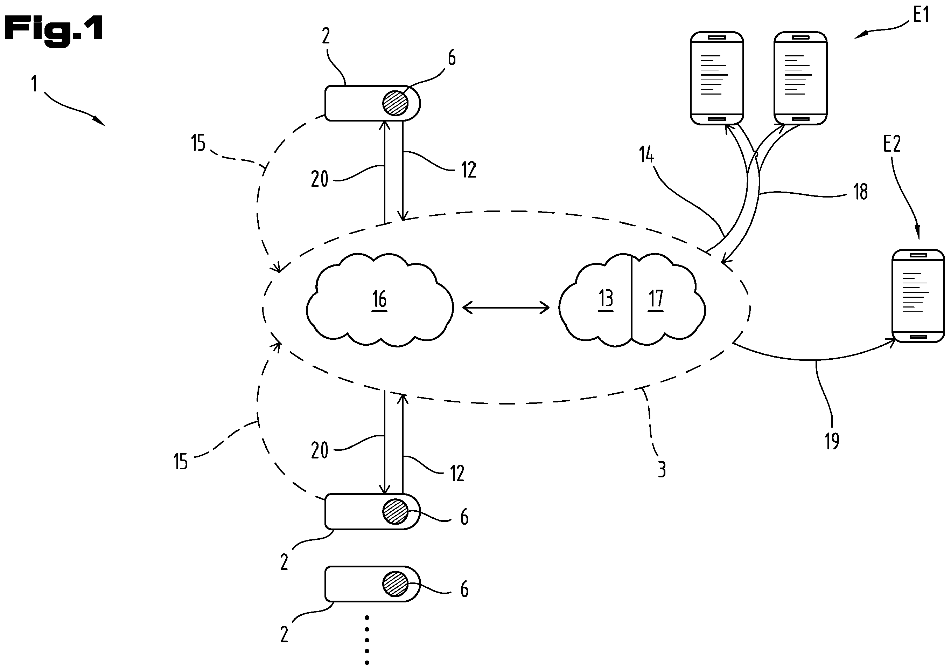

Fig. 1 zeigt Notfall-Kommunikationssystem 1 mit Notfall-Kommunikationsgeräten 2 und einer Internet of Things (IoT) - Architektur 3. Die IoT - Architektur 3 ist eingerichtet, mit den zumindest zwei Notfall-Kommunikationsgeräten 2 über deren Drahtlosschnittstelle 4 zu kommunizieren. Im Folgenden wird die Erfindung anhand mehrerer Notfall-Kommunikationsgeräten 2 beschrieben. Jedoch wäre es denkbar, dass ein solches System auch nur ein Notfall-Kommunikationsgerät 2 umfasst.

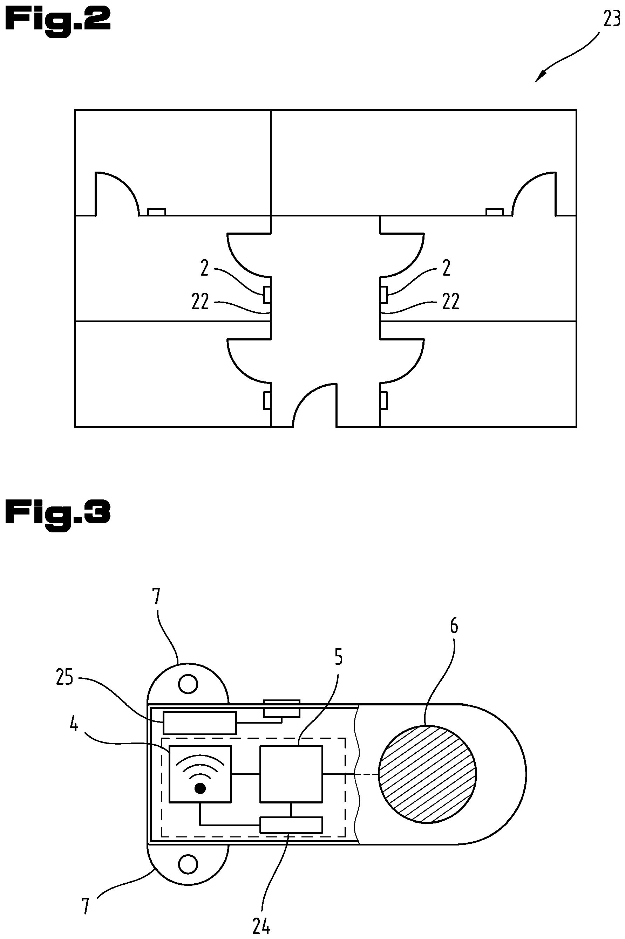

Wie in Fig. 3 zu sehen umfassen die Notfall-Kommunikationsgeräte 2 jeweils zumindest eine, vorzugsweise mechanische, Betätigungseinrichtung 6, vorzugsweise in Form eines Buttons, zumindest eine Drahtlosschnittstelle 4, vorzugsweise eine WLAN-Schnittstelle und/oder eine GSM-Schnittstelle, und ein mit der zumindest einen Betätigungseinrichtung 6 verbundenes Nachrichten-Modul 5. Das Nachrichten-Modul 5 ist ausgebildet, bei Betätigung der Betätigungseinrichtung 6 eine Nachricht 12 über die Drahtlosschnittstelle 4 an die IoT - Architektur 3 zu übermitteln.

In den Notfall-Kommunikationsgeräten 2 kann auch jeweils ein Ortungssystem 24, insbesondere ein GPS-Ortungssystem, integriert sein. Bei einer stationären Anordnung, z.B. in Räumen eines Gebäudes 23, kann ein solches Ortungssystem auch entfallen. Der Standort kann dann z.B. auch über die Kennung K (bzw. Code) eines Gerätes 2 ermittelt werden.

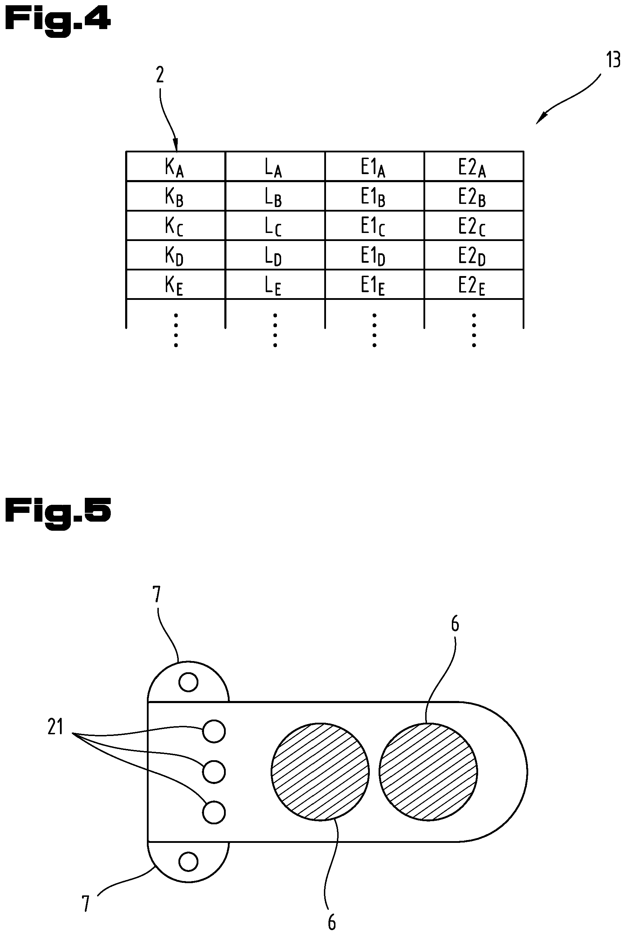

Vorzugsweise ist in dem Notfall-Kommunikationsgerät 2 auch ein elektrischer Energiespeicher 25 (z.B. Akku, Batterie) vorgesehen, welcher die entsprechenden Module mit Energie versorgt. Dieser kann über eine externe Schnittstelle, z.B. eine USB-Schnittstelle, geladen werden. Das Nachrichten-Modul 5, die Drahtlosschnittstelle 4 und/oder gegebenenfalls das Ortungssystem 24 können getrennt oder auf einer gemeinsamen Platine (in Fig. 4 strichliert angedeutet) angeordnet sein.

In der IoT - Architektur 3 ist eine Zuordnungsroutine 13, vorzugsweise in Art einer Zuordnungstabelle, hinterlegt (siehe Fig. 4), die anhand der übermittelten Nachricht 12 das Notfall-Kommunikationsgerät 2, welches die Nachricht 12 übermittelt hat, erkennt und jedem der zumindest zwei Notfall-Kommunikationsgeräte 2 jeweils zumindest eine Empfangsadresse E1, E2, insbesondere eine Telefonnummer, zuordnet. Die IoT - Architektur 3 ist weiters dazu eingerichtet, bei Einlangen einer Nachricht 12 von einem Notfall-Kommunikationsgerät 2 eine alarmbezogene Information 14, 19 an die diesem Notfall-Kommunikationsgerät 2 zugeordnete(n) Empfangsadresse(n) E1, E2 zu versenden.

Die Zuordnungsroutine 13 kann programmierbar sein. In der Zuordnungsroutine 13 können verschiedenen Notfall-Kommunikationsgeräten 2 unterschiedliche Empfangsadressen E1, E2 zugeordnet sein (Fig. 4). In der Zuordnungsroutine 13 kann auch jedem der zumindest zwei Notfall-Kommunikationsgeräte 2 eine Information L betreffend den Standort des jeweiligen Notfall-Kommunikationsgerätes 2 zugeordnet sein (siehe Fig. 4).

Die von einem Notfall-Kommunikationsgerät 2 an die IoT - Architektur 3 übermittelte Nachricht 12 kann eine Kennung K zur Identifikation des Notfall-Kommunikationsgerätes 2 und/oder eine Information L betreffend den Standort des Notfall-Kommunikationsgerätes 2 umfassen. Ebenso kann die von der IoT - Architektur 3 versendete alarmbezogene Information 14 eine Kennung zur Identifikation des Notfall-Kommunikationsgerätes und/oder eine Information betreffend den Standort des Notfall-Kommunikationsgerätes 2 umfassen.

Die Nachrichten-Module 5 der Notfall-Kommunikationsgeräte 2 können in Zeitabständen, vorzugsweise zumindest 1x pro Tag, eine Statusnachricht 15 an die IoT - Architektur 3 übermitteln. Die IoT - Architektur 3 kann eine Prüfroutine 16 zur Funktionsprüfung der Notfall-Kommunikationsgeräte 2 umfassen (Fig. 1), wobei die Prüfroutine 16 ausgebildet ist, die Statusnachrichten 15 zu empfangen und auszuwerten.

Wie aus Fig. 1 ersichtlich kann die IoT - Architektur 3 auch eine Feedbackroutine 17 umfassen, die eingerichtet ist, von einer Empfangsadresse E1, an die eine alarmbezogene Information 14 versendet wurde, ein Bestätigungsnachricht 18 über den Empfang und/oder die Quittierung der alarmbezogenen Information 14 zu empfangen.

Wie in Fig. 4 dargestellt kann in der Zuordnungsroutine 13 der IoT - Architektur 3 jedem der zumindest zwei Notfall-Kommunikationsgeräte 2 jeweils zumindest eine erste Empfangsadresse E1 und zumindest eine zweite Empfangsadresse E2 zugeordnet sein. Die IoT - Architektur 3 versendet dann bei Einlangen einer Nachricht 12 von einem Notfall-Kommunikationsgerät 2 eine erste alarmbezogene Information 14 an die diesem Notfall-Kommunikationsgerät 2 zugeordnete(n) erste(n) Empfangsadresse(n) E1. Bei Ausbleiben einer Bestätigungsnachricht über den Empfang und/oder die Quittierung der ersten alarmbezogenen Information 14 von der/den ersten Empfangsadresse(n) E1 kann dann ein zweites alarmbezogenes Signal 19 an die zweite(n) Empfangsadresse(n) E2 versendet werden (Fig. 1).

Die IoT - Architektur 3 kann auch ein Feedbacksignal 20 an jenes Notfall-Kommunikationsgerät 2, welches eine Nachricht 12 an die IoT - Architektur 3 übermittelt hat, senden. Dies erfolgt insbesondere dann, wenn die Nachricht 12 empfangen und/oder das Notfall-Kommunikationsgerät 2 erkannt und/oder eine alarmbezogene Information 14, 19 an die diesem Kommunikationsgerät 2 zugeordnete(n) Empfangsadresse(n) E1, E2 versendet wurde.

Wie in der Ausführungsform der Fig. 5 zu sehen kann die Notfall-Kommunikationsgeräte 2 jeweils zumindest eine, vorzugsweise zumindest zwei, Leuchteinrichtung(en) 21, vorzugsweise in Form einer LED, aufweisen, die mit dem Nachrichten-Modul 5 verbunden ist/sind. Das Nachrichten-Modul 5 kann die zumindest eine Leuchteinrichtung 21 zum Leuchten bringen, wenn eine Nachricht 12 an die IoT-Architektur 3 übermittelt und/oder ein Feedbacksignal 20 von der IoT-Architektur 3 empfangen wurde.

Besonders bevorzugt ist, wenn die von außerhalb des Notfall-Kommunikationsgerätes 2 zugängliche Betätigungsfläche der Betätigungseinrichtung 6 zumindest 2cm², besonders bevorzugt zumindest 3cm² beträgt,
und/oder die von außerhalb des Notfall-Kommunikationsgerätes 2 zugängliche Betätigungsfläche der Betätigungseinrichtung 6 zumindest 15%, vorzugsweise zumindest 25%, der Frontfläche der Betätigungseinrichtung 6 einnimmt (siehe Fig. 3 und 5).

In der Variante der Fig. 5 weist das Notfall-Kommunikationsgerät 2 zwei Betätigungseinrichtungen 6 auf, die mit dem Nachrichten-Modul 5 verbunden sind, wobei vorzugsweise das Notfall-Kommunikationsgerät 2 eingerichtet ist, bei gleichzeitiger Betätigung von zwei Betätigungseinrichtungen 6 einen Betriebsmodus zu starten und/oder zwischen zwei Betriebsmodi zu wechseln.

Fig. 5 zeigt auch eine Befestigungsschnittstelle 7 zum Befestigen an einer ortsfesten Struktur, insbesondere einer Wand 22 (Fig. 2). In der dargestellten Ausführungsform handelt es sich hierbei um Löcher für Schrauben. Alternativ kann es sich dabei auch um einen Magneten und/oder einen Hacken und/oder eine Schiene und/oder einen Rast- oder Verriegelungsmechanismus handeln

Fig. 2 zeigt, dass die Notfall-Kommunikationsgeräte 2 in verschiedenen Räumen eines Gebäudes 23, insbesondere eines Betriebsgebäudes, verteilt angeordnet, und vorzugsweise ortsfest und/oder lösbar montiert sein können. Bevorzugt sind Anordnungen an Wänden 22 bevorzugt gleich neben einer Tür.

Ein erfindungsgemäßes Verfahren zum Betreiben eines Notfall-Kommunikationssystems erfolgt so, dass das Nachrichten-Modul 5 eines Notfall-Kommunikationsgerätes 2 bei Betätigung der Betätigungseinrichtung 6 eine Nachricht 12 über die Drahtlosschnittstelle 4 an die IoT - Architektur 3 übermittelt, und die in der IoT - Architektur 3 hinterlegte Zuordnungsroutine 13 anhand der übermittelten Nachricht 12 das Notfall-Kommunikationsgerät 2, welches die Nachricht 12 übermittelt hat, erkennt und jedem der zumindest zwei Kommunikationsgeräte 2 jeweils zumindest eine Empfangsadresse E1, E2, insbesondere eine Telefonnummer, zuordnet, und die IoT - Architektur 3 bei Einlangen einer Nachricht 12 von einem Notfall-Kommunikationsgerät 2 eine alarmbezogene Information 14, 19 an die diesem Notfall-Kommunikationsgerät 2 zugeordnete(n) Empfangsadresse(n) E1, E2 versendet.

### Bezugszeichenaufstellung

- 1: Notfall-Kommunikationssystem
- 2: Notfall-Kommunikationsgerät
- 3: Internet of Things (IoT) - Architektur
- 4: Drahtlosschnittstelle
- 5: Nachrichten-Modul
- 6: Betätigungseinrichtung
- 7: Befestigungsschnittstelle
- 12: Nachricht
- 13: Zuordnungsroutine
- 14: alarmbezogene Information
- 15: Statusnachricht
- 16: Prüfroutine
- 17: Feedbackroutine
- 18: Bestätigungsnachricht
- 19: alarmbezogene Information
- 20: Feedbacksignal
- 21: Leuchteinrichtung
- 22: Wand
- 23: Gebäude
- 24: Ortungssystem
- 25: elektrischer Energiespeicher
- K: Kennung
- L: Information
- E1: Empfangsadresse
- E2: Empfangsadresse

## Patentansprüche

1. Notfall-Kommunikationssystem (1) umfassend
- zumindest ein, vorzugsweise zumindest zwei, Notfall-Kommunikationsgerät(e) (2),
- eine Internet of Things (IoT) - Architektur (3), welche eingerichtet ist, mit dem zumindest einen, vorzugsweise mit den zumindest zwei, Notfall-Kommunikationsgerät(en) (2) über dessen/deren Drahtlosschnittstelle (4) zu kommunizieren,
wobei das zumindest eine, vorzugsweise die zumindest zwei, Notfall-Kommunikationsgerät(e) (2) jeweils
zumindest eine, vorzugsweise mechanische, Betätigungseinrichtung (6), vorzugsweise in Form eines Buttons,
zumindest eine Drahtlosschnittstelle (4), vorzugsweise eine WLAN-Schnittstelle und/oder eine GSM-Schnittstelle,
und ein mit der zumindest einen Betätigungseinrichtung (6) verbundenes Nachrichten-Modul (5), welches ausgebildet ist, bei Betätigung der Betätigungseinrichtung (6) eine Nachricht (12) über die Drahtlosschnittstelle (4) an die IoT - Architektur (3) zu übermitteln,
umfassen,
wobei in der IoT - Architektur (3) eine Zuordnungsroutine (13), vorzugsweise in Art einer Zuordnungstabelle, hinterlegt ist, die anhand der übermittelten Nachricht (12) das Notfall-Kommunikationsgerät (2), welches die Nachricht (12) übermittelt hat, erkennt und dem zumindest einen, vorzugsweise jedem der zumindest zwei, Notfall-Kommunikationsgerät(e) (2) jeweils zumindest eine Empfangsadresse (E1, E2), insbesondere eine Telefonnummer, zuordnet,
und wobei die IoT - Architektur (3) eingerichtet ist, bei Einlangen einer Nachricht (12) von einem Notfall-Kommunikationsgerät (2) eine alarmbezogene Information (14, 19) an die diesem Notfall-Kommunikationsgerät (2) zugeordnete(n) Empfangsadresse(n) (E1, E2) zu versenden.

2. Notfall-Kommunikationssystem nach Anspruch 1, **dadurch gekennzeichnet, dass** in der Zuordnungsroutine (13) dem zumindest einen, vorzugsweise jedem der zumindest zwei, Notfall-Kommunikationsgerät(e) (2) eine Information (L) betreffend den Standort des jeweiligen Notfall-Kommunikationsgerätes (2) zugeordnet ist.

3. Notfall-Kommunikationssystem nach einem der vorhergehenden Ansprüche, **dadurch gekennzeichnet, dass** die von einem Notfall-Kommunikationsgerät (2) an die IoT - Architektur (3) übermittelte Nachricht (12) eine Kennung (K) zur Identifikation des Notfall-Kommunikationsgerätes (2) und/oder eine Information (L) betreffend den Standort des Notfall-Kommunikationsgerätes (2) umfasst
und/oder dass die von der IoT - Architektur (3) versendete alarmbezogene Information (14) eine Kennung zur Identifikation des Notfall-Kommunikationsgerätes und/oder eine Information betreffend den Standort des Notfall-Kommunikationsgerätes (2) umfasst.

4. Notfall-Kommunikationssystem nach einem der vorhergehenden Ansprüche, **dadurch gekennzeichnet, dass** das/die Nachrichten-Modul(e) (5) des/der Notfall-Kommunikationsgeräte(s) (2) eingerichtet ist/sind, in Zeitabständen, vorzugsweise zumindest 1x pro Tag, zumindest eine Statusnachricht (15) an die IoT - Architektur (3) zu übermitteln, und dass die IoT - Architektur (3) eine Prüfroutine (16) zur Funktionsprüfung des/der Notfall-Kommunikationsgeräte(s) (2) umfasst, wobei die Prüfroutine (16) ausgebildet ist, die Statusnachricht (15) zu empfangen und auszuwerten.

5. Notfall-Kommunikationssystem nach einem der vorhergehenden Ansprüche, **dadurch gekennzeichnet, dass** die IoT - Architektur (3) eine Feedbackroutine (17) umfasst, die eingerichtet ist, von Empfangsadressen (E1, E2), an die eine alarmbezogene Information (14) versendet wurde, ein Bestätigungsnachricht (18) über den Empfang und/oder die Quittierung der alarmbezogenen Information (14) zu empfangen.

6. Notfall-Kommunikationssystem nach einem der vorhergehenden Ansprüche, **dadurch gekennzeichnet, dass** in der Zuordnungsroutine (13) der IoT - Architektur (3) dem zumindest einen, vorzugsweise jedem der zumindest zwei, Notfall-Kommunikationsgerät(e) (2) jeweils zumindest eine erste Empfangsadresse (E1) und zumindest eine zweite Empfangsadresse (E2) zugeordnet sind und dass die IoT - Architektur (3) eingerichtet ist, bei Einlangen einer Nachricht (12) von einem Notfall-Kommunikationsgerät (2) eine erste alarmbezogene Information (14) an die diesem Notfall-Kommunikationsgerät (2) zugeordnete(n) erste(n) Empfangsadresse(n) (E1) zu versenden und dass bei Ausbleiben einer Bestätigungsnachricht über den Empfang und/oder die Quittierung der ersten alarmbezogenen Information (14) von der/den ersten Empfangsadresse(n) (E1) ein zweites alarmbezogenes Signal (19) an die zweite(n) Empfangsadresse(n) (E2) versendet wird.

7. Notfall-Kommunikationssystem nach einem der vorhergehenden Ansprüche, **dadurch gekennzeichnet, dass** die IoT - Architektur (3) eingerichtet ist, ein Feedbacksignal (20) an jenes Notfall-Kommunikationsgerät (2), welches eine Nachricht (12) an die IoT - Architektur (3) übermittelt hat, zu senden, insbesondere wenn die Nachricht (12) empfangen und/oder das Notfall-Kommunikationsgerät (2) erkannt und/oder eine alarmbezogene Information (14, 19) an die diesem Kommunikationsgerät (2) zugeordnete(n) Empfangsadresse(n) (E1, E2) versendet wurde.

8. Notfall-Kommunikationssystem nach einem der vorhergehenden Ansprüche, **dadurch gekennzeichnet, dass** das/die Notfall-Kommunikationsgerät(e) (2) jeweils zumindest eine, vorzugsweise zumindest zwei, Leuchteinrichtung(en) (21), vorzugsweise in Form einer LED, aufweisen, die mit dem Nachrichten-Modul (5) verbunden ist/sind, wobei vorzugsweise das Nachrichten-Modul (5) eingerichtet ist, die zumindest eine Leuchteinrichtung (21) zum Leuchten zu bringen, wenn das Nachrichten-Modul (5) eine Nachricht (12) an die IoT-Architektur (3) übermittelt und/oder ein Feedbacksignal (20) von der IoT-Architektur (3) empfangen hat.

9. Notfall-Kommunikationssystem nach einem der vorhergehenden Ansprüche, **dadurch gekennzeichnet, dass** die von außerhalb des Notfall-Kommunikationsgerätes (2) zugängliche Betätigungsfläche der Betätigungseinrichtung (6) zumindest 2cm², besonders bevorzugt zumindest 3cm² beträgt,
und/oder dass die von außerhalb des Notfall-Kommunikationsgerätes (2) zugängliche Betätigungsfläche der Betätigungseinrichtung (6) zumindest 15%, vorzugsweise zumindest 25%, der Frontfläche der Betätigungseinrichtung (6) einnimmt.

10. Notfall-Kommunikationssystem nach einem der vorhergehenden Ansprüche, **dadurch gekennzeichnet, dass** das/die Notfall-Kommunikationsgerät(e) (2) jeweils zumindest zwei Betätigungseinrichtungen (6), die mit dem Nachrichten-Modul (5) verbunden sind, aufweist, wobei vorzugsweise das Notfall-Kommunikationsgerät (2) eingerichtet ist, bei gleichzeitiger Betätigung von zwei Betätigungseinrichtungen (6) einen Betriebsmodus zu starten und/oder zwischen zwei Betriebsmodi zu wechseln.

11. Notfall-Kommunikationssystem nach einem der vorhergehenden Ansprüche, **dadurch gekennzeichnet, dass** das/die Notfall-Kommunikationsgerät(e) (2) jeweils eine Befestigungsschnittstelle (7), insbesondere ein oder mehrere Löcher für Schrauben und/oder einen Magneten und/oder einen Hacken und/oder eine Schiene und/oder einen Rast- oder Verriegelungsmechanismus, zum - vorzugsweise lösbaren - Befestigen an einer ortsfesten Struktur, insbesondere einer Wand (22) aufweisen, wobei vorzugsweise die Befestigungsschnittstelle (7) eine Handhabe, insbesondere einen Griff und/oder eine Greiffläche und/oder einen Betätigungshebel, zum werkzeuglosen Befestigen und/oder Lösen des Notfall-Kommunikationsgerätes (2) aufweist.

12. Notfall-Kommunikationssystem nach Anspruch 11, **dadurch gekennzeichnet, dass** die Befestigungsschnittstelle (7) - zur Befestigung des Notfall-Kommunikationsgerätes (2) an oder in einer elektrischen Schnittstelle, insbesondere einer Steckdose - in Form eines Steckers ausgebildet ist, wobei vorzugsweise elektrische Kontakte des Steckers mit einem elektrischen Energiespeicher (25) des Notfall-Kommunikationsgerätes (2) verbunden sind.

13. Notfall-Kommunikationssystem nach einem der vorhergehenden Ansprüche, **dadurch gekennzeichnet, dass** die Notfall-Kommunikationsgeräte (2) in verschiedenen Räumen eines Gebäudes (23), insbesondere eines Betriebsgebäudes, verteilt angeordnet, und vorzugsweise ortsfest - vorzugsweise lösbar - montiert sind, vorzugsweise an den Wänden (22) der Räume und/oder jeweils neben einer Tür.

14. Notfall-Kommunikationssystem nach einem der vorhergehenden Ansprüche, **dadurch gekennzeichnet, dass** in dem/den Notfall-Kommunikationsgerät(en) (2) jeweils ein Ortungssystem (24), insbesondere ein GPS-Ortungssystem, und/oder ein elektrischer Energiespeicher (25), vorzugsweise mit einer Ladeschnittstelle, integriert ist.

15. Notfall-Kommunikationssystem nach einem der vorhergehenden Ansprüche, **dadurch gekennzeichnet, dass** die Zuordnungsroutine (13) programmierbar ist und/oder dass in der Zuordnungsroutine (13) verschiedenen Notfall-Kommunikationsgeräten (2) unterschiedliche Empfangsadressen (E1, E2) zugeordnet sind.

16. Verfahren zum Betreiben eines Notfall-Kommunikationssystems, wobei das Notfall-Kommunikationssystem (1) nach einem der vorhergehenden Ansprüche ausgebildet ist, wobei das Nachrichten-Modul (5) eines Notfall-Kommunikationsgerätes (2) bei Betätigung der Betätigungseinrichtung (6) eine Nachricht (12) über die Drahtlosschnittstelle (4) an die IoT - Architektur (3) übermittelt, und wobei die in der IoT - Architektur (3) hinterlegte Zuordnungsroutine (13) anhand der übermittelten Nachricht (12) das Notfall-Kommunikationsgerät (2), welches die Nachricht (12) übermittelt hat, erkennt und dem zumindest einen, vorzugsweise jedem der zumindest zwei, Notfall-Kommunikationsgerät(e) (2) jeweils zumindest eine Empfangsadresse (E1, E2), insbesondere eine Telefonnummer, zuordnet,
und wobei die IoT - Architektur (3) bei Einlangen einer Nachricht (12) von einem Notfall-Kommunikationsgerät (2) eine alarmbezogene Information (14, 19) an die diesem Notfall-Kommunikationsgerät (2) zugeordnete(n) Empfangsadresse(n) (E1, E2) versendet.

17. Notfall-Kommunikationsgerät (2) für ein Notfall-Kommunikationssystem (1) nach einem der Ansprüche 1 bis 14, **dadurch gekennzeichnet, dass** das Notfall-Kommunikationsgerät (2)
- zumindest eine, vorzugsweise mechanische, Betätigungseinrichtung (6), vorzugsweise in Form eines Buttons,
- zumindest eine Drahtlosschnittstelle (4), vorzugsweise eine WLAN-Schnittstelle und/oder eine GSM-Schnittstelle, und
- ein mit der zumindest einen Betätigungseinrichtung (6) verbundenes Nachrichten-Modul (5), welches ausgebildet ist, bei Betätigung der Betätigungseinrichtung (6) eine Nachricht (12) über die Drahtlosschnittstelle (4) an eine IoT - Architektur (3) zu übermitteln,
umfasst.

18. Notfall-Kommunikationsgerät nach Anspruch 17, **dadurch gekennzeichnet, dass** das Nachrichten-Modul (5) eingerichtet ist, in Zeitabständen, vorzugsweise zumindest 1x pro Tag, Statusnachrichten an eine IoT - Architektur (3) zu übermitteln.

19. Notfall-Kommunikationsgerät nach Anspruch 17 oder 18, **dadurch gekennzeichnet, dass** das Notfall-Kommunikationsgerät (2) zumindest eine, vorzugsweise zumindest zwei, Leuchteinrichtung(en) (21), vorzugsweise in Form einer LED, aufweisen, die mit dem Nachrichten-Modul (5) verbunden ist/sind und dass das Nachrichten-Modul (5) eingerichtet ist, die zumindest eine Leuchteinrichtung (21) zum Leuchten zu bringen, wenn eine Nachricht (12) an die IoT-Architektur (3) übermittelt und/oder ein Feedbacksignal (20) von der IoT-Architektur (3) empfangen hat.

20. Notfall-Kommunikationsgerät nach einem der Ansprüche 17 bis 19, **dadurch gekennzeichnet, dass** die von außerhalb des Notfall-Kommunikationsgerätes (2) zugängliche Betätigungsfläche der Betätigungseinrichtung (6) zumindest 2cm², besonders bevorzugt zumindest 3cm² beträgt,
und/oder dass die von außerhalb des Notfall-Kommunikationsgerätes (2) zugängliche Betätigungsfläche der Betätigungseinrichtung (6) zumindest 15%, vorzugsweise zumindest 25%, der Frontfläche der Betätigungseinrichtung (6) einnimmt.

21. Notfall-Kommunikationsgerät nach einem der Ansprüche 17 bis 20, **dadurch gekennzeichnet, dass** das Notfall-Kommunikationsgerät (2) zumindest zwei Betätigungseinrichtungen (6), die mit dem Nachrichten-Modul (5) verbunden sind, aufweist, wobei vorzugsweise das Notfall-Kommunikationsgerät (2) eingerichtet ist, bei gleichzeitiger Betätigung von zwei Betätigungseinrichtungen (6) einen Betriebsmodus zu starten und/oder zwischen zwei Betriebsmodi zu wechseln.

22. Notfall-Kommunikationsgerät nach einem der Ansprüche 17 bis 21, **dadurch gekennzeichnet, dass** das Notfall-Kommunikationsgerät (2) eine Befestigungsschnittstelle (6), insbesondere ein oder mehrere Löcher für Schrauben und/oder einen Magneten und/oder einen Hacken und/oder eine Schiene und/oder einen Rast- oder Verriegelungsmechanismus, zum - vorzugsweise lösbaren - Befestigen an einer ortsfesten Struktur, insbesondere einer Wand (22) aufweist, wobei vorzugsweise die Befestigungsschnittstelle (6) eine Handhabe, insbesondere einen Griff und/oder eine Greiffläche und/oder einen Betätigungshebel, zum werkzeuglosen Befestigen und/oder Lösen des Notfall-Kommunikationsgerätes (2) aufweist.

23. Notfall-Kommunikationsgerät nach Anspruch 22, **dadurch gekennzeichnet, dass** die Befestigungsschnittstelle (7) - zur Befestigung des Notfall-Kommunikationsgerätes (2) an oder in einer elektrischen Schnittstelle, insbesondere einer Steckdose - in Form eines Steckers ausgebildet ist, wobei vorzugsweise elektrische Kontakte des Steckers mit einem elektrischen Energiespeicher (25) des Notfall-Kommunikationsgerätes (2) verbunden sind.

24. Notfall-Kommunikationsgerät nach einem der Ansprüche 17 bis 23, **dadurch gekennzeichnet, dass** in dem Notfall-Kommunikationsgerät (2) ein Ortungssystem (24), insbesondere ein GPS-Ortungssystem, und/oder ein elektrischer Energiespeicher (25), vorzugsweise mit einer Ladeschnittstelle, integriert ist.
